**Europäisches Patentamt**

**European Patent Office**

**Office européen des brevets**

(19)

(11) Publication number : **0 411 197 B1**

## (12) EUROPEAN PATENT SPECIFICATION

(45) Date of publication of patent specification :
21.10.92 Bulletin 92/43

(51) Int. Cl.$^5$ : **F02D 41/22, F02D 41/38**

(21) Application number : **89114452.9**

(22) Date of filing : **04.08.89**

(54) **Electronic engine control for a motor vehicle.**

(43) Date of publication of application :
06.02.91 Bulletin 91/06

(45) Publication of the grant of the patent :
21.10.92 Bulletin 92/43

(84) Designated Contracting States :
**DE FR GB IT**

(56) References cited :
**EP-A- 0 326 693**

(56) References cited :
**FR-A- 2 514 162**
**GB-A- 2 144 180**
**US-A- 4 648 364**
**US-A- 4 736 267**

(73) Proprietor : **ROBERT BOSCH GMBH**
**Postfach 30 02 20**
**W-7000 Stuttgart 30 (DE)**

(72) Inventor : **Bartke, Ralf Michael, Dipl.-Ing**
**Franz-Conrad-Strasse 1**
**W-7580 Buehl (DE)**

EP 0 411 197 B1

## Description

This invention relates to an electronic engine control (EEC) for a motor vehicle and more especially to an EEC equipped with a fuel cut off safety device, according to the first part of claim 1 or 6.

A safety device for an EEC for a motor vehicle engine is known from U.K. Patent No. 2040503 (OLS 2839467). In this known device, the position of the fuel throttle and of the accelerator pedal, and possibly also the condition of an automatic speed controller (ASC) are checked by means of switches connected in the power supply line to a relay which controls energisation of the winding of an electric fuel pump.

U.K. Patent Specification No. 1133540 discloses an EEC for a motor vehicle having a safety device wherein the engine speed is monitored and the fuel pump relay is de-energised to stop the fuel pump if the engine speed drops below a predetermined but possibly adjustable value. However, this function is blocked during starting, and the fuel pump relay is temporarily energised via a switching device. After a predetermined delay, typically about two seconds, the EEC speed-dependent controller (safety device) takes over the energisation of the fuel pump relay.

However, when reliance is to be placed on such a safety device when travelling, possibly at high speed, it would be advantageous to be able to check the operational condition of an EEC safety device as aforesaid, prior to making a journey.

UK-Patent application No. 21 44 180 discloses a method for monitoring a fuel injection system of an internal combustion engine. If the first engine overrun operation following starting occurs, a safety device which suck empty a suction chamber of an injection pump in the injection system in the event of a fault is briefly switched on and the reaction of the engine fuel system is evaluated. If the fuel system does not react in a predetermined manner, then a fault is present and the engine is switched off or switched over to emergency operation.

The testing and monitoring of a safety device for cutting off the power supply to an electric fuel pump is not disclosed in this patent application.

It is an object of this invention to enable a fuel cut off safety device in an electronic engine control to be tested and/or monitored. This object is achieved with the features according to claims 1 or 6.

The invention applies more especially to an EEC of the general kind described in the above-mentioned U.K. Patent Specification No. 1133540. In this case, the voltage at the terminals of the fuel pump is measured when the engine is started, i.e. during the approximate two second delay period which occurs on switching on the ignition before the speed-dependent controller takes over, and if the correct voltage is not detected at the EEC, the speed-dependent controller is prevented from taking over.

The correct test voltage to be detected at the EEC will normally be ground voltage. If ground voltage is not detected, this is indicative of a short circuit, broken electrical contact, jammed or welded relay contact or the like at the fuel pump winding/control relay combination, whereby the vehicle is unsafe to drive. It may be possible, alternatively, to arrange for the EEC to activate an alarm device for indicating the fault, whilst still maintaining the on-condition of the fuel pump, so that the vehicle can be driven to the nearest garage. In this way, continuous monitoring of the fuel pump voltage may be made possible, to assist in isolation of the source of a fault in the EEC safety device which may develop during travel.

The invention as described can be made possible with minimal expense simply by the addition of a single conductor connecting to the fuel pump power supply circuit, and modification of the injection system is not required.

A practical example of electronic engine control (EEC) with checkable safety device in accordance with the invention is shown in the accompanying drawings, in which:

Figure 1 shows the arrangement as a simplified circuit diagram; and

Figure 2 is a voltage timing diagram.

Referring to the drawings, there is shown a circuit block 10 which represents an EEC equipped with a fuel cut-out safety circuit, for example in accordance with the device described in U.K. Specification No. 1133450.

In an EEC, the throttle is controlled by the accelerator pedal through an electrical transmission which includes position sensors and a servo-motor, as well known in the art.

The known EEC circuit comprises switches the states of which are dependent on the positions of the throttle and the accelerator pedal. These switches are connected in the power supply circuit to the fuel pump relay and, if not in the correct states relative to one another, cause de-energisation of the fuel pump relay, with consequential stopping of the supply of fuel by the fuel pump, which leads to slowing down and eventual stopping of the engine. In addition, the known EEC circuit includes a safety device which switches off the fuel pump if the r.p.m. of the engine drop below a given value. This safety unit is temporarily blocked on ignition, giving a delay of approximately two seconds at which ground voltage should be present at the terminals of the fuel pump winding. In accordance with the invention, if this ground voltage is not detected at the EEC on ignition, the EEC, including in particular the aforesaid safety device, is prevented from taking over and energising the fuel pump winding at normal engine speeds, so that the vehicle cannot be driven.

In the drawing, the fuel pump relay which serves for fuel cut off is referenced 12, and the line FCO indicates the power line through which energisation and de-energisation of the relay is controlled. The fuel pump relay 12 has a movable contact 14 in the power supply line to the fuel pump 16. In the absence of an error in the throttle/pedal relationship, the relay 12 is constantly energised during running of the engine, provided also that the engine speed does not fall below a predetermined value. However, in the event of error in the throttle/pedal relationship or a failure in the safety device, the fuel pump relay 12 is de-energised via the FCO line.

Before commencing a journey, it would be advantageous to be able to test the EEC safety circuit, and in accordance with the invention this is made possible by monitoring the voltage across the fuel pump terminals. In the drawing, the line FCOM indicates the conductor via which the voltage across the fuel pump terminals is fed back to the EEC.

When the ignition switch is first turned to the power-on condition, the EEC then immediately carries out a test on the fuel pump 16 and checks the reaction of the relay 12. For this purpose, the EEC causes a voltage to be temporarily applied on the FCO line which should cause a switching off of the pump 16. The reaction of the relay 12 is detected by the EEC by means of a check on the reaction voltage on the FCOM line.

If the reaction voltage does not occur on the FCOM-line in a predetermined time period after applying the voltage to switch off the fuel pump (16) via the FCO-line, the EEC recognises a fault condititon of the safety means (12) and the engine is prevented from starting.

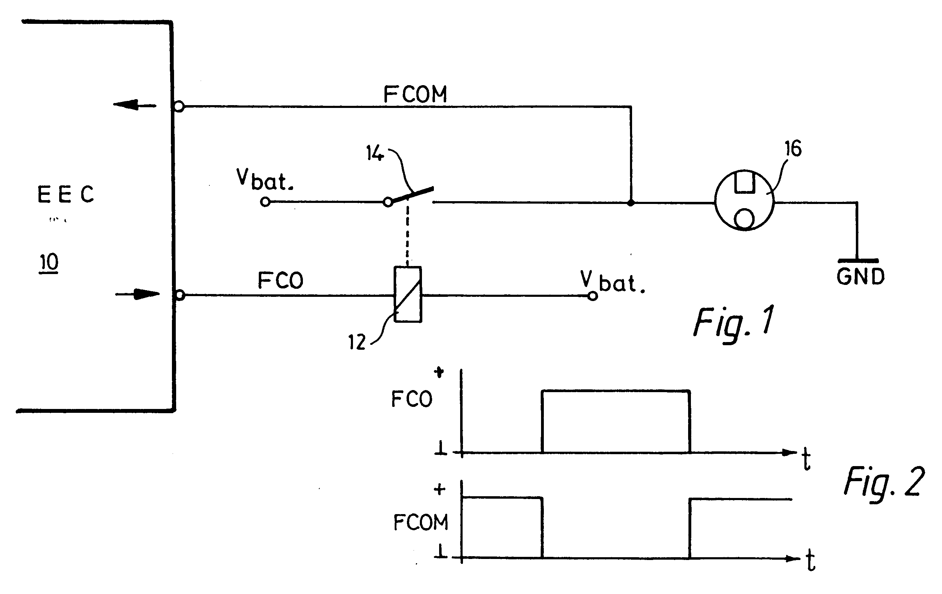

Figure 2 shows in the upper diagram the voltage charge applied on the FCO line by the EEC, whilst the lower diagram shows the reaction voltage detected on the FCOM line when the relay is responding correctly and no fault condition exists.

## Claims

1.  Method for controlling and monitoring an internal combustion engine of a motor vehicle by an electronic engine control system (10, EEC), equipped with safety means (14) for cutting off the power supply to an electric fuel pump (16), when supplied with an on-signal
    characterized by
    - the first step of detecting the voltage at the terminals of the fuel pump (16),
    - the second step of a plausibility check of that voltage against the on-signal of a safety means (14),
    - and the third step of preventing operation of the engine, if the said plausibility check failed or of activating an alarm device for indicating the fault, whilst still maintaining the on-condition of the fuel pump, if the said plausibility check failed.

2.  Method according to claim 1, characterized in that the plausibility check is correct, when the detected voltage at the terminals of a fuel pump (16) occurs in a predetermined time period after supplying the on-signal.

3.  Method according to claim 1, characterized in that the safety means (14) cut off the power supply of the fuel pump (16) in the event of a fault.

4.  Method according to claim 1, characterized in that the on-signal is generated during the start of the engine before commencing a journey.

5.  Method according to the claims 1 and 4, characterized in that the on-signal is generated for a time period, which is not longer than about 2 seconds.

6.  Electronic engine control system (10, EEC), for controlling and monitoring an internal combustion engine of a motor vehicle, for carrying out the method according to claim 1, equipped with safety means (14) for cutting off the power supply to an electric fuel pump (16), when supplied with an on-signal,
    characterized by
    - first means for detecting the voltage at the terminals of the fuel pump (16),
    - second means for providing a plausibility check of the said voltage against the on-signal of the safety means (14),
    - third means for preventing the operation of the engine if the said plausibility check failed, or for activating an alarm device for indicating the fault, whilst still maintaining the on-condition of a fuel pump (16), if the said plausibility check failed.

7.  Electronic engine control system according to claim 6, comprising the addition of a single conductor connecting the fuel pump power supply line with the electronic engine control system.

8.  Electronic engine control system according to claim 6 or claim 7, wherein the electronic engine control system has a speed-dependent safety device which is blocked during ignition and the fuel pump voltage is detected on an ignition.

## Patentansprüche

1.  Verfahren zur Steuerung und Überwachung einer Brennkraftmaschine eines Kraftfahrzeugs durch ein elektronisches Motorsteuerungssystem (10, EEC), welches mit Sicherheitsmittel (14) ausgestattet ist, um die Energieversorgung zu einer elektrischen Kraftstoffpumpe (16) abzuschalten, wenn diesem ein Ein-Signal zugeführt wird,

gekennzeichnet durch
- den ersten Schritt zur Erfassung der Spannung an den Anschlüssen der Kraftstoffpumpe 16,
- den zweiten Schritt zur Plausibilitätsüberprüfung dieser Spannung bezüglich des Ein-Signals eines Sicherheitsmittels (14),
- und den dritten Schritt zur Verhinderung des Betriebs des Motors, wenn die genannte Plausibilitätsüberprüfung mißlingt oder zur Aktivierung einer Alarmeinrichtung zur Anzeige des Fehlers, während der Ein-Zustand der Kraftstoffpumpe weiterhin aufrechterhalten wird, wenn die genannte Plausibilitätsüberprüfung mißlingt.

2. Verfahren nach Anspruch 1, dadurch gekennzeichnet, daß die Plausibilitätsüberprüfung korrekt ist, wenn die erfaßte Spannung an den Anschlüssen der Kraftstoffpumpe (16) in einer vorgegebenen Zeitdauer nach Zuführung des Ein-Signals auftritt.

3. Verfahren nach Anspruch 1, dadurch gekennzeichnet, daß die Sicherheitsmittel (14) die Energieversorgung zur Kraftstoffpumpe (16) im Fehlerfall unterbrechen.

4. Verfahren nach Anspruch 1, dadurch gekennzeichnet, daß das Ein-Signal während des Starts des Motors vor Fahrtantritt erzeugt wird.

5. Verfahren nach den Ansprüchen 1 und 4, dadurch gekennzeichnet, daß das Ein-Signal für eine Zeitdauer erzeugt wird, welche nicht länger als ungefähr 2 Sekunden ist.

6. Elektronisches Motorsteuerungssystem (10, EEC), zur Steuerung und Überwachung einer Brennkraftmaschine eines Kraftfahrzeugs zur Durchführung des Verfahrens nach Anspruch 1, ausgestattet mit Sicherheitsmittel zur Abschaltung der Energieversorgung einer elektrischen Kraftstoffpumpe (16), wenn diesem ein Ein-Signal zugeführt wird,

gekennzeichnet durch
- erste Mittel zur Erfassung der Spannung an den Anschlüssen der Kraftstoffpumpe (16),
- zweite Mittel zur Bereitstellung einer Plausibilitätsüberprüfung dieser Spannung bezüglich des Ein-Signals des Sicherheitsmittels (14),
- dritte Mittel zur Verhinderung des Betriebs des Motors, wenn diese Plausibilitätsüberprüfung mißlingt,
oder zur Aktivierung einer Alarmeinrichtung zur Anzeige des Fehlers, während der Ein-Zustand der Kraftstoffpumpe (16) weiterhin aufrechterhalten wird, wenn diese Plausibilitätsüberprüfung mißlingt.

7. Elektronisches Motorsteuerungssytem nach Anspruch 6, welches die Hinzufügung eines einzelnen Leiters umfaßt, welcher die Energieversorgungsleitung der Kraftstoffpumpe mit dem elektronischen Motorsteuerungssystem verbindet.

8. Elektronisches Motorsteuerungssystem nach Anspruch 6 oder 7, wobei das elektronische Motorsteuerungssystem eine drehzahlabhängige Sicherheitseinrichtung aufweist, welche während des Starts blockiert ist und wobei die Kraftstoffpumpenspannung während des Starts erfasst wird.

**Revendications**

1) Procédé pour commander et contrôler un moteur à combustion interne d'un véhicule automobile par un système de commande électronique de moteur (10, EEC) équipé de moyens de sécurité (14) pour couper l'alimentation en énergie d'une pompe électrique de carburant (16), alimenté par un signal de marche, procédé caractérisé par
- la première étape consistant à détecter la tension aux bornes de la pompe de carburant (16),
- la seconde étape consistant à contrôler la vraisemblance de cette tension par rapport au signal de marche d'un moyen de sécurité (14),
- et la troisième étape consistant à empêcher le fonctionnement du moteur, si le contrôle de vraisemblance a échoué.
- ou consistant à actionner un appareil d'alarme pour endiguer le défaut, tout en maintenant la situation de marche d'une pompe de carburant (16), si le contrôle de vraisemblance a échoué.

2) Procédé selon la revendication 1, caractérisé en ce que le contrôle de vraisemblance est correct quand la tension détectée aux bornes de la pompe de carburant (16) a lieu dans une période de temps prédéterminée après l'envoi du signal de marche.

3) Procédé selon la revendication 1, caractérisé en ce que les moyens de sécurité (14) coupant l'alimentation en énergie de la pompe de carburant (16) en cas de défaut.

4) Procédé selon la revendication 1, caractérisé en ce que le signal de marche est engendré pendant le démarrage du moteur avant de commencer un voyage.

5) Procédé selon la revendication 1 et la revendication 4, caractérisé en ce que le signal de marche est engendré pour une période de temps qui n'est pas plus longue de deux secondes environ.

6) Système de commande électronique de moteur (10, EEC) pour commander et surveiller un moteur à combustion interne d'un véhicule automobile, pour la mise en oeuvre du procédé selon la revendication 1, équipé de moyens de sécurité (14) pour couper l'alimentation en énergie à une pompe électrique de carburant (16), alimenté par un signal de marche, système caractérisé par

- des premiers dispositifs pour détecter la tension aux bornes de la pompe de carburant (16),
- des seconds dispositifs pour fournir un contrôle de vraisemblance de la tension par rapport au signal de marche des moyens de sécurité (14),
- des troisièmes dispositifs pour empêcher le fonctionnement du moteur si le contrôle de vraisemblance a échoué

ou pour actionner un appareil d'alarme pour endiguer le défaut, tout en maintenant la situation de marche d'une pompe de carburant (16), si le contrôle de vraisemblance a échoué.

7) Système de commande électronique de moteur selon la revendication 6, comprenant l'addition d'un conducteur unique reliant la ligne d'alimentation en énergie de la pompe de carburant au système de commande électronique du moteur.

8) Système de commande électronique selon la revendication 6 ou la revendication 7, dans lequel le système de commande électronique de moteur a un appareil de sécurité dépendant de la vitesse qui est bloqué pendant l'allumage et la tension de la pompe de carburant est détectée lors d'un allumage.

FCOM

Vbat.

14

16

12

FCO

Vbat.

GND

*Fig. 1*

FCO

+

⊥

t

FCOM

+

⊥

t

*Fig. 2*

EP 0 411 197 B1